# FASCICULE DE BREVET EUROPEEN

(11) **EP 2 953 901 B1**
(45) Date de publication et mention de la délivrance du brevet: **02.10.2019**
(21) Numéro de dépôt: 14705814.3
(22) Date de dépôt: 16.01.2014
(51) Int. Cl.: C01G 49/00, C01G 33/00, H01M 4/485

(54) **OXYDE MIXTE DE TITANE ET DE NIOBIUM COMPRENANT UN ELEMENT TRIVALENT**
MISCHOXID AUS TITAN UND NIOB MIT EINEM DREIWERTIGEN ELEMENT
MIXED OXIDE OF TITANIUM AND NIOBIUM COMPRISING A TRIVALENT ELEMENT

(30) Priorité: 06.02.2013 FR 1351023
(43) Date de publication de la demande: 16.12.2015
(73) Titulaire: Commissariat à l'Énergie Atomique et aux Énergies Alternatives, 75015 Paris (FR)
(72) Inventeur: BUANNIC, Lucienne, F-92150 Suresnes (FR); COLIN, Jean-François, F-38240 Meylan (FR); REY, Marlène, F-38113 Veurey Voroize (FR)
(74) Mandataire: Cabinet Laurent & Charras
(86) Numéro de dépôt international: PCT/FR2014/050080
(87) Numéro de publication internationale: WO 2014/122376

(56) Documents cités:
- EP-A2- 2 503 625
- TENA M A ET AL: "Synthesis and characterization of GaxTi1-2xNbxO2 solid solutions", MATERIALS RESEARCH BULLETIN, ELSEVIER, KIDLINGTON, GB, vol. 27, no. 4, 1 avril 1992 (1992-04-01), pages 473-481, XP025440241, ISSN: 0025-5408, DOI: 10.1016/0025-5408(92)90025-U [extrait le 1992-04-01]
- TENA M A ET AL: "Influence of niobate structures on the formation of rutile solid solutions [M<III>NbO4-1bTiO2, where M<III>=Al,Fe,Cr]", MATERIALS RESEARCH BULLETIN, ELSEVIER, KIDLINGTON, GB, vol. 27, no. 11, 1 novembre 1992 (1992-11-01), pages 1301-1308, XP024077665, ISSN: 0025-5408, DOI: 10.1016/0025-5408(92)90095-H [extrait le 1992-11-01]
- B. BALZER ET AL: "Solid Solutions in the FeNbO4TiO2 System", CRYSTAL RESEARCH AND TECHNOLOGY, vol. 31, no. 1, 1 janvier 1996 (1996-01-01), pages 93-98, XP055070649, ISSN: 0232-1300, DOI: 10.1002/crat.2170310116

## Description

### DOMAINE DE L'INVENTION

L'invention concerne un oxyde mixte de titane et de niobium comprenant un élément trivalent et étant dépourvu de lithium.

Le domaine technique de la présente invention concerne notamment le stockage de l'énergie, et plus précisément la mise au point de matériaux d'électrode pouvant être utilisés dans la fabrication d'accumulateurs au lithium.

### ETAT ANTERIEUR DE LA TECHNIQUE

Les accumulateurs au lithium sont de plus en plus utilisés pour stocker de l'énergie et ainsi fournir une source d'énergie autonome, en particulier, dans les équipements portables. Ils comprennent une électrode positive et une électrode négative entre lesquelles est positionné un séparateur d'électrodes assurant la conduction des ions Li⁺.

En raison de leurs densités d'énergie massique et volumique plus avantageuses, les accumulateurs au lithium tendent à remplacer progressivement les accumulateurs nickel-cadmium (Ni-Cd) et nickel-hydrure métallique (Ni-MH) (la densité d'énergie est rapportée à la masse de la cellule Li-ion complète).

En effet, bien que les premiers accumulateurs Li-ion présentaient une densité d'énergie d'environ 85 Wh/kg, les dernières générations avoisinent 200 Wh/kg, soit nettement plus que les densités d'énergie des accumulateurs Ni-MH (100 Wh/kg) et Ni-Cd (50 Wh/kg).

Ainsi, les nouvelles générations d'accumulateurs au lithium permettent non seulement d'élargir les domaines d'utilisation, mais stimulent également la mise au point de nouveaux matériaux d'électrode dans le but de les rendre encore plus performants par amélioration du ratio entre l'énergie et l'unité de masse et/ou de volume.

De manière générale, les matériaux actifs d'électrode positive sont des composés lamellaires tels que LiCoO₂, LiNiO₂ et les oxydes mixtes de type Li(Ni, Co, Mn, Al)O₂, ou des composés de structure spinelle de composition proche de LiMn₂O_{4.}

Les matériaux actifs d'électrode négative sont généralement réalisés à base de carbone (graphite, coke,...). Néanmoins ils peuvent également être de type spinelle Li₄Ti₅O₁₂ ou un métal formant un alliage avec le lithium (Sn, Si, ...). Les capacités spécifiques théoriques et pratiques de ces composés sont de l'ordre de 370 mAh/g pour le graphite, et de l'ordre de 175 mAh/g pour l'oxyde de titane.

Certains matériaux tels que le composé Li₄Ti₅O₁₂ ont un potentiel de travail relativement élevé, environ 1.6V, ce qui les rend très sécuritaires. Ils peuvent ainsi être utilisés en tant que matériau d'électrode négative pour des applications en puissance, notamment lorsqu'ils présentent également une très bonne cyclabilité à haut régime, et ce malgré leur faible capacité par rapport à celle du graphite.

Le niobium présentant un potentiel de travail proche de celui du titane, la recherche d'alternatives au composé Li₄Ti₅O₁₂, en tant que matériau d'électrode, a permis le développement d'oxydes de niobium mais aussi d'oxydes mixtes titane-niobium. En outre, il est à noter que le niobium permet d'échanger 2 électrons par centre métallique (Nb⁵⁺/Nb³⁺).

Ces oxydes mixtes Ti-Nb de l'art antérieur sont notamment les suivants :
- oxydes lamellaires de types ATiNbO₅ avec A=H, Li, et la phase condensée correspondante Ti₂Nb₂O₉ (Colin et al., "A Novel Layered Titanoniobate LiTiNbO5: Topotactic Synthesis and Electrochemistry versus Lithium", Inorg. Chem., 45, 7217-7223, 2006; Colin et al., "Lithium Insertion in an Oriented Nanoporous Oxide with a Tunnel Structure: Ti2Nb2O9", Chem. Mater., 20,1534-1540, 2008; Colin et al., "New titanoniobates (Li,H)2TiNbO5 and (Li,H)3TiNbO5: synthesis, structure and properties", J. Mater. Chem., 18, 3121-3128,2008);
- phases de type Wadsley-Roth, par exemple TiNb₂O₇ et Ti₂Nb₁₀O₂₉ (Cava et al., "Lithium Insertion in Wadsley-Roth Phases Based on Niobium Oxide", J. Electrochem. Soc., 130, 2345-2351, 1983; Han et al., "New Anode Framework for Rechargeable Lithium Batteries", Chem. Mater., 23, 2027-2029, 2011; Han et al., "3-V Full Cell Performance of Anode Framework TiNb2O7/Spinel LiNi0.5Mn1.5O4", Chem. Mater., 23, 3404-3407, 2011).

Les composés du premier groupe peuvent générer des capacités en première décharge proches de 250 mAh/g. Cependant, ils présentent des problèmes d'irréversibilité.

Les composés du deuxième groupe tels que TiNb₂O₇ et Ti₂Nb₁₀O₂₉ s'avèrent particulièrement prometteurs, notamment pour des applications requérant plus d'énergie, eu égard à leur capacité théorique (388 mAh/g et 396 mAh/g respectivement) nettement supérieure à celle de Li₄Ti₅O₁₂ (175 mAh/g). Ils permettent également de conserver un potentiel de travail proche de celui de Li₄Ti₅O₁₂ et présentent donc les avantages sécuritaires de ce dernier.

Le document JP 2010-287496 décrit la synthèse en voie solide des composés TiNb₂O₇ et Ti₂Nb₁₀O₂₉ à partir des précurseurs TiO₂ et Nb₂O₅. Ces deux oxydes ainsi préparés présentent des capacités respectives de l'ordre de 270 mAh/g et 240 mAh/g.

L'art antérieur décrit la synthèse multi-étapes de TiNb₂O₇ par voie sol-gel, en utilisant l'acide fluorhydrique et l'acide citrique. Les performances à bas régime de ce composé atteignent 280 mAh/g mais les capacités s'écroulent lors de son utilisation à haut régime.

L'amélioration de la cyclabilité à haut régime du composé TiNb₂O₇ peut être obtenue par enduction en carbone et dopage au niobium. Cependant, ces techniques nécessitent des conditions d'atmosphère particulières (vide et argon), particulièrement délicates à mettre en oeuvre au niveau industriel.

Une autre alternative au composé Li₄Ti₅O₁₂ consiste à synthétiser en plusieurs étapes, en voie solide, le matériau Ti_{0.9}Nb_{2.1}O₇ enrobé de carbone. Il présente une tenue en régime supérieure à celle du TiNb₂O₇ obtenu par voie sol-gel (190 mAh/g à 9C, soit 67% de la capacité à bas régime). Néanmoins, cette synthèse nécessite l'usage d'atmosphère contrôlée pour les étapes de dopage et de coating, respectivement vide et argon, difficilement reproductibles à l'échelle industrielle.

Le document EP 2 503 625 décrit un matériau lithié dans lequel une partie de niobium est substituée par un ou plusieurs éléments. Il en résulte une réduction de la température de fusion de l'oxyde mixte de titane et de niobium, de 1475 °C à 1260 °C.

Le problème que vise à résoudre la présente invention consiste à proposer un nouveau matériau d'électrode à base d'un oxyde mixte de titane et de niobium, dont la perte de capacité spécifique est atténuée lors des cycles de charge/décharge par rapport aux oxydes mixtes de l'art antérieur.

### EXPOSE DE L'INVENTION

Le matériau - objet de l'invention est un oxyde mixte de titane et de niobium de formule générale MₓTi_{y}Nb_{z}Oᵤ. Contrairement aux matériaux de l'art antérieur, il comprend un élément trivalent M qui substitue en partie le titane. L'élément trivalent permet d'améliorer la stabilité et la durée de vie du matériau lorsqu'il est utilisé en tant que matériau d'électrode.

Par l'élément trivalent M, on entend un élément choisi dans le groupe comprenant le fer, le gallium, le molybdène, l'aluminium, le bore, et leurs mélanges.

Plus précisément, la présente invention concerne un oxyde mixte de titane et de niobium, dépourvu de lithium, comprenant au moins un métal trivalent, et présentant un rapport molaire Nb/Ti supérieur à 2.

Le rapport Nb/Ti est strictement supérieur à 2.

L'oxyde mixte inventif est de formule (I) : MₓTi₁₋₂ₓNb₂₊ₓO_{7±δ} (I) dans laquelle 0 < x ≤ 0.20 ; -0.3 ≤ δ ≤ 0.3. De plus, des oxydes mixtes MₓTi₂₋₂ₓNb₁₀₊ₓO_{29±δ} (II) dans laquelle 0 < x ≤ 0.40 ; -0.3 ≤ δ ≤ 0.3 ; le rapport molaire Nb/Ti étant avantageusement supérieur ou égal à 5 sont divulugés.

L'invention a donc trait à un oxyde mixte de titane et de niobium dont la perte de capacité spécifique est atténuée lors des cycles de charge/décharge et avantageusement choisi parmi les oxydes mixtes de formule (I).

Selon deux modes de réalisation particuliers, le matériau correspond à la substitution d'une partie du titane contenu dans TiNb₂O₇ (selon la présente invention) ou Ti₂Nb₁₀O₂₉ (hors de l'invention) par un élément trivalent.

Ainsi conformément aux formules I et II, l'élément trivalent M et le titane se partagent les mêmes sites.

L'élément trivalent M est choisi dans le groupe comprenant le fer, le gallium, le molybdène, l'aluminium, le bore, et leurs mélanges. Il présentent tous un degré d'oxydation égal à +III lorsqu'ils sont intégrés dans l'oxyde mixte de l'invention.

Selon un mode de réalisation préféré, le métal trivalent est le fer ou le gallium. De manière encore plus préférentielle, le métal trivalent est le gallium.

Eu égards à ses propriétés, et en comparaison avec les composés de l'art antérieur, l'oxyde mixte de titane et niobium de l'invention peut être utilisé dans des applications requérant plus d'énergie.

Il présente une capacité spécifique théorique pouvant être comprise entre 368 mAh/g et 396 mAh/g, alors que le composé Li₄Ti₅O₁₂ couramment utilisé dans les accumulateurs lithium de l'art antérieur présente une capacité théorique de l'ordre de 175 mAh/g.

La présente invention concerne également un procédé de préparation de l'oxyde mixte décrit ci-dessus, selon les étapes suivantes :
- traitement solvothermal d'une solution contenant au moins : un précurseur de titane, un précurseur de niobium, et un précurseur du métal trivalent ;
- optionnellement broyage mécanique de l'oxyde mixte obtenu à l'issue du traitement solvothermal ;
- calcination de l'oxyde mixte.

### Traitement solvothermal

Généralement, le traitement solvothermal comprend les étapes suivantes :
- mettre en solution les précurseurs de titane, de niobium, et du métal trivalent ;
- précipiter les précurseurs ;
- traiter thermiquement et sous pression le mélange de précurseurs précipités ainsi obtenu.

La mise en solution des précurseurs est avantageusement réalisée dans un alcool, comme de l'éthanol. Alternativement, d'autres alcools peuvent être utilisés comme l'isopropanol, le butanol, voire des glycols.

Les précurseurs sont avantageusement solubilisés dans la même solution, afin de former un mélange homogène. La solubilisation de certains des précurseurs peut être mise en oeuvre en présence d'un acide, tel que l'acide sulfurique notamment.

La précipitation du mélange ainsi obtenu peut notamment être réalisée par ajustement du pH, avantageusement à environ 10. Cette étape peut être avantageusement mise en oeuvre par addition d'ammoniaque.

La précipitation du mélange de précurseurs peut donner une pâte.

De manière générale, le traitement solvothermal auquel est soumis le mélange de précurseurs précipités peut être réalisé à une température comprise entre 200 et 250°C, avantageusement de l'ordre de 220°C.

L'augmentation de la température peut correspondre à un gradient compris entre 1 et 5°C/min, avantageusement 2 °C/min.

D'autre part, la rampe de refroidissement peut avantageusement être comprise entre 1 et 10 °C/min, avantageusement 5 °C/min.

La durée de ce traitement solvothermal peut être comprise entre 2 et 10 heures, avantageusement de l'ordre de 5 heures. De manière générale, la durée de traitement ne comprend pas le temps nécessaire pour chauffer et pour refroidir le mélange.

Toutefois, les conditions peuvent dépendre de la quantité de matériau à traiter.

Selon un mode de réalisation préféré, le traitement solvothermal est mis en oeuvre dans une bombe hydrothermale (réacteur, autoclave) afin de procéder à un traitement thermique sous pression. Le volume «mort» dans le containeur (en général en polytétrafluoroethylène (Téflon®)) peut avantageusement représenter les deux tiers du volume total.

### Lavage :

Le procédé - objet de l'invention peut également comprendre au moins une étape de lavage, succédant au traitement solvothermal.

Une fois le traitement solvothermal terminé, le mélange résultant (oxyde mixte sous forme amorphe) se présentant avantageusement sous la forme d'une pâte, peut être éventuellement lavé afin de séparer l'oxyde mixte des sous-produits non-désirés.

Cette étape de lavage est préférentiellement effectuée à l'eau distillée. Le lavage peut être réalisé par des étapes successives de centrifugation jusqu'à ce que le pH de la solution surnageante soit compris entre 6 et 7. Ce lavage permet notamment d'éliminer les sulfates, chlorures et hydroxydes résiduels éventuellement présents.

A l'issue du lavage, le mélange est séché, avantageusement à l'air, notamment dans une étuve, dont la température est avantageusement d'au moins 60 °C, et inférieure à 150 °C.

### Broyage :

Le procédé - objet de l'invention comprend une éventuelle étape de broyage mécanique de l'oxyde mixte amorphe obtenu à l'issue du traitement solvothermal.

Le broyage est avantageusement effectué après l'éventuel lavage. Toutefois, le broyage est réalisé préalablement à l'étape de calcination.

Cette étape peut être réalisé en présence d'un solvant organique tel qu'un alcane et notamment l'hexane.

Le broyage est généralement réalisé dans un broyeur à une vitesse comprise entre 300 et 500 tours par minute, avantageusement de l'ordre de 500 tours par minute.

Le broyeur utilisé peut être, par exemple, un broyeur centrifuge à bille de type Retsch S 100.

La durée de l'étape de broyage est avantageusement comprise entre 15 et 120 minutes, plus avantageusement encore de l'ordre de 30 minutes.

Le broyage permet notamment d'homogénéiser la taille des particules avant l'étape de calcination.

### Calcination

Ce traitement thermique est avantageusement réalisé à une température comprise entre 700 et 1200 °C, et plus avantageusement encore entre 700 et 1000 °C.

La durée de cette étape est avantageusement comprise entre 30 mn et 2 heures, plus avantageusement de l'ordre d'une heure.

En outre, la vitesse de chauffe peut être comprise entre 1 et 5 °C/min, avantageusement de l'ordre de 3°C/min.

La vitesse de refroidissement peut être comprise entre 5 et 20 °C/min, avantageusement de l'ordre de 10°C/min.

Cette étape favorise la cristallisation de la structure de l'oxyde mixte de titane et de niobium. Elle peut être réalisée sous air, tout comme l'ensemble des étapes du procédé - objet de l'invention.

Il est à noter que la température optimale de calcination des composés dépend de la stoechiométrie de l'oxyde mixte à synthétiser. Elle ne peut être généralisée.

### Précurseurs :

Le précurseur de titane peut être avantageusement choisi dans le groupe comprenant l'oxysulfate de titane (TiOSO₄) ; l'isopropoxyde de titane (Ti(OCH(CH₃)₂)₄) ; le chlorure de titane (TiCl₄) ; et le butoxyde de titane (Ti(OC₄H₉)₄).

Pour le niobium, il s'agit avantageusement d'un composé de niobium V, et notamment du chlorure de niobium (NbCl₅) ou l'éthoxyde de niobium, Nb(OC₂H₅)₅.

Les précurseurs des éléments trivalent peuvent être avantageusement choisis dans le groupe comprenant les composés présentant un degré d'oxydation +III, tels que notamment, FeCl₃, Fe(NO₃)₃ ; Fe₂(SO₄)₃ ; GaCl₃ ; Ga(NO₃)₃ ; Ga₂(SO₄)₃ ; MoCl₃ ; AlCl₃ ; Al(NO₃)₃ ; Al₂(SO₄)₃ ; BCl₃...

La présente invention concerne également l'utilisation de l'oxyde mixte de titane et de niobium décrit ci-avant en tant que matériau d'électrode, notamment pour un accumulateur au lithium-ion. Il s'agit avantageusement d'un matériau d'électrode négative (anode).

### Matériau d'électrode

L'invention couvre aussi l'électrode comprenant ledit oxyde mixte de titane et de niobium, et l'accumulateur Li-ion comprenant au moins une telle électrode.

De manière avantageuse, une électrode selon l'invention comprend en outre un liant.

### Accumulateur au lithium-ion

En ce qui concerne l'accumulateur Li-ion selon l'invention, il comprend au moins et successivement une électrode négative (anode), un séparateur d'électrodes, et une électrode positive (cathode).

De manière générale, les électrodes positive et négative de ce type d'accumulateur contiennent chacune un matériau d'insertion des ions Li⁺.

Ainsi, dans un accumulateur Li-ion, le lithium ne se trouve jamais sous forme métallique mais sous forme de cations Li⁺ qui font des allers retours entre les deux matériaux d'insertion du lithium des électrodes négative et positive, à chaque charge et décharge de l'accumulateur.

L'électrode négative comprend un matériau d'insertion du lithium, avantageusement le matériau objet de l'invention c'est-à-dire l'oxyde mixte de titane et de niobium décrit ci-avant.

Chaque électrode est avantageusement supportée par un collecteur de courant, préférentiellement métallique.

Les électrodes sont préparées selon les techniques connues de l'homme du métier, notamment par dépôt, sur un collecteur de courant, d'une encre d'électrode à base d'une dispersion du matériau actif, d'un liant (de préférence organique), et d'un conducteur électrique (de préférence à base de carbone).

Le liant confère à l'électrode ainsi obtenue une bonne conduction ionique et une tenue mécanique satisfaisante.

En ce qui concerne le séparateur d'électrodes, il est généralement imbibé d'un conducteur ionique (électrolyte) afin de favoriser la conduction ionique entre l'anode et la cathode. L'électrolyte comprend généralement un solvant polaire aprotique et un sel dont le cation est au moins en partie du lithium.

Selon un mode de réalisation particulier, l'électrode peut être préparée à partir d'une dispersion comportant, entre autres, l'oxyde mixte de Ti-Nb selon l'invention, un liant organique, et un conducteur électronique.

La dispersion est ensuite déposée sur une feuille métallique servant de collecteur de courant, par exemple de l'aluminium.

De manière avantageuse, le liant mis en oeuvre est un polymère pouvant être avantageusement choisi dans le groupe comprenant les polymères à base de méthacrylate de méthyle, d'acrylonitrile, ou de fluorure de vinylidène ; les polyéthers ; les polyesters ; la carboxyméthylcellulose ; et leurs mélanges.

Le conducteur électronique permet de faciliter le transfert du courant depuis l'électrode jusqu'au collecteur de courant. Il peut notamment s'agir de carbone de taille nanométrique tel que le Super P® ou le VGCF (de l'anglais « *Vapor grown carbon fiber* » c'est-à-dire des fibres de carbone déposées en phase vapeur) par exemple.

Ainsi, selon un mode de réalisation particulier, l'électrode négative peut être un composite constitué d'un mélange de l'oxyde mixte de Ti-Nb de l'invention, d'un liant tel que par exemple le fluorure de vinylidène et d'un conducteur électronique tel que par exemple le noir de carbone (noir d'acétylène), avantageusement dans des proportions de type 80/10/10 respectivement.

L'électrode positive de l'accumulateur Li-ion peut être constituée par tout type de matériau connu et adapté à cet usage.

Dans le cadre de la présente invention, l'électrode positive comprend non seulement un matériau d'insertion des ions Li⁺, mais elle est également une source de lithium pour l'électrode négative. Elle est donc avantageusement constituée d'un matériau pouvant initialement fournir les ions Li⁺, et les réinsérer par la suite.

Ainsi, l'électrode positive peut comprendre un matériau choisi dans le groupe comprenant le matériau lamellaire de type Li₁₊ᵥNiₓMn_{y}Co_{z}O₂ avec x + y + z + v = 1 ; le matériau de type spinelle LiNiᵤMn₂₋ᵤO₄ avec 0 < u < 1 ; et le matériau de type phosphate LiMPO₄ avec M = Fe, Mn, Co, Ni.

Outre le matériau actif, l'électrode positive peut également comprendre au moins un conducteur électronique et éventuellement un liant organique tel que ceux mentionnés précédemment.

S'agissant de l'électrolyte, il doit être conducteur d'ions Li⁺. De manière avantageuse, il comprend au moins un sel comportant des cations Li⁺, ledit sel étant préférentiellement choisi dans le groupe comprenant LiClO₄ ; LiAsF₆ ; LiPF₆ ; LiBF₄ ; LiR_{F}SO₃ ; LiCH₃SO₃ ; LiN(R_{F}SO₂)₂ ; LiC(R_{F}SO₂)₃ ; LiTFSI (lithium trifluoromethane sulphonylimide) ; LiBOB (bis(oxalato)borate) ; et LiBETI (lithium bis (perfluoroethylsulfonyl)imide) ; et leurs mélanges.

Dans ces formules, le groupement R_{F} est avantageusement choisi parmi un atome de fluor et un groupement perfluoroalkyle comportant entre un et huit atomes de carbone.

L'électrolyte peut être mis en oeuvre par dissolution d'un sel comportant des cations Li+, dans un solvant polaire aprotique (carbonate d'éthylène, carbonate de propylène, carbonate de diméthyle, carbonate de diéthyle, carbonate d'éthylméthyle,...). De manière générale, il est avantageusement supporté par le séparateur d'électrodes, qui est alors imbibé d'électrolyte.

Selon un autre mode de réalisation, l'électrolyte peut être constitué d'un polymère. Dans ce cas, le sel de lithium n'est pas dissous dans un solvant organique, mais dans un composite polymère solide tel que le POE (polyoxyde d'éthylène), le PAN (polyacrylonitrile), le PMMA (polyméthacrylate de méthyle), le PVdF (polyfluorure de vinylidène) ou un de leurs dérivés.

Selon un autre mode de réalisation particulier, l'électrolyte peut aussi être constitué d'un matériau inorganique conducteur d'ions Li⁺ pouvant notamment être choisi dans le groupe comprenant Li₇La₃Zr₂O₇ ; Li_{1.4}Al_{0.4}Ge_{1.6}(PO₄)₃ ; Li₃OX avec X = Cl ou Br ; Li₁₀GeP₂S₁₂ ; et une céramique vitreuse du type {70 Li₂S . 27 P₂S₅ . 3 P₂O₅}. Dans ce cas, l'électrode négative peut être un composite constitué d'un mélange de l'oxyde mixte de Ti-Nb de l'invention, d'un électrolyte inorganique solide tel que par exemple Li₇La₃Zr₂O₇ et d'un conducteur électronique tel que par exemple le noir de carbone (noir d'acétylène), avantageusement dans des proportions de type 60/30/10 respectivement.

L'invention et les avantages qui en découlent ressortiront mieux de la figure et des exemples suivants donnés afin d'illustrer l'invention et non de manière limitative.

### DESCRIPTION DE LA FIGURE

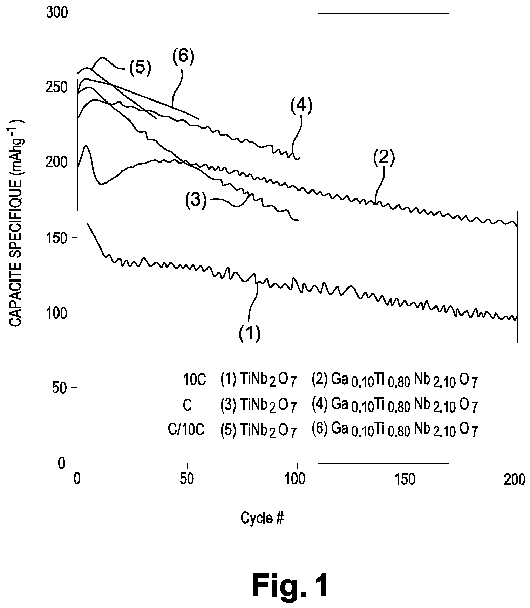

La figure 1 représente le graphe correspondant à la capacité spécifique à différents régimes (10C, C, C/10) des matériaux d'oxydes mixtes TiNb₂O₇ (art antérieur) et Ga_{0.10}Ti_{0.80}Nb_{2.10}O₇ (invention).

### EXEMPLES DE REALISATION DE L'INVENTION

### Exemple 1: Synthèse de Ga_{0.10}Ti_{0.80}Nb_{2.10}O₇

0,125 g de GaCl₃ et 4.025 g de NbCl₅ sont dissous dans 10 mL d'éthanol anhydre sous atmosphère inerte (argon) et agitation magnétique. La solution est transférée sous air.

Sont ensuite ajoutés à cette solution, 6.052 g d'oxysulfate de titane (TiOSO₄) à 15 % en masse dans l'acide sulfurique, puis 10 mL d'éthanol afin de dissoudre les précurseurs, le tout sous agitation magnétique. Le pH de la solution résultante est ajusté à 10 par lente addition d'ammoniaque NH₃ à 28 % en masse dans l'eau.

La pâte est transférée dans un conteneur en téflon® de 90 mL de contenance qui est ensuite placé dans un autoclave. La pâte est ensuite chauffée à 220 °C pendant 5 heures avec une rampe de chauffe et de refroidissement de 2 et 5 °C/min respectivement.

La pâte est alors lavée à l'eau distillée par centrifugation jusqu'à obtention d'un pH entre 6 et 7.

Le composé résultant est séché à 60 °C pendant 12 heures puis broyé mécaniquement (BM) pendant 30 min à 500 rpm (tours par minute) dans de l'hexane.

Après évaporation du solvant, la poudre est calcinée à 950 °C pendant 1 heure avec une température de chauffe/refroidissement de 3 °C/min afin de cristalliser Ga_{0.10}Ti_{0.80}Nb_{2.10}O₇.

### Exemple 2: Synthèse de Fe_{0.10}Ti_{0.80}Nb_{2.10}O₇

0,116 g de FeCl₃ et 4.025 g de NbCl₅ sont dissous dans 10 mL d'éthanol anhydre sous atmosphère inerte (argon) et agitation magnétique.

La solution résultante est transférée sous air.

Sont ensuite ajoutés à cette solution, 6.052 g d'oxysulfate de titane (TiOSO₄) à 15 % en masse dans l'acide sulfurique et 10 mL d'éthanol afin de dissoudre les précurseurs, le tout sous agitation magnétique. Le pH de la solution résultante est ajusté à 10 par lente addition d'ammoniaque NH₃ à 28 % en masse dans l'eau.

La pâte est transférée dans un conteneur en téflon® de 90 mL de contenance qui est ensuite placé dans un autoclave. La pâte est ensuite chauffée à 220 °C pendant 5 heures avec une rampe de chauffe et de refroidissement de 2 et 5 °C/min respectivement.

La pâte est alors lavée à l'eau distillée par centrifugation jusqu'à obtention d'un pH entre 6 et 7.

Le composé est séché à 60 °C pendant 12 heures, puis broyé mécaniquement (BM) pendant 30 min à 500 rpm (tours par minute) dans de l'hexane.

Après évaporation du solvant, la poudre est calcinée à 950 °C pendant 1 heure avec une température de chauffe/refroidissement de 3 °C/min afin de cristalliser Fe_{0.10}Ti_{0.80}Nb_{2.10}O₇.

### Exemple 3:

Un accumulateur au lithium de format "pile bouton" comprenant les éléments suivants est préparé :
- une électrode négative de lithium (16 mm de diamètre, 130 µm d'épaisseur) déposée sur un disque de nickel servant de collecteur de courant ;
- une électrode positive constituée d'un disque de 14 mm de diamètre prélevée sur un film composite de 25 µm d'épaisseur comprenant les matériaux de l'invention préparés selon les exemples 1 et 2 (80 % en masse), du carbone Super P (10 % en masse) en tant que conducteur électronique et du fluorure de polyvinylidène (10 % en masse) en guise de liant, le tout étant déposé sur un collecteur de courant en aluminium (feuille de 20 micromètre d'épaisseur) ;
- un séparateur d'électrodes, imbibé d'un l'électrolyte liquide à base du sel LiPF₆ (1mol/L) en solution dans un mélange de carbonate d'éthyle, carbonate de propylène et carbonate de diméthyle.

Les performances électrochimiques (capacité spécifique) entre 3,0 et 1,0 V à différents régimes de Ga_{0.10}Ti_{0.80}Nb_{2.10}O₇ (invention) ont été mesurées et comparées à celles de TiNb₂O₇ (art antérieur) (figure 1).

Tableau 1 : Pourcentages de perte de capacité pour TiNb₂O₇, Ga_{0.10}Ti_{0.80}Nb_{2.10}O₇ et Fe_{0.10}Ti_{0.80}Nb_{2.10}O₇ calculés à C/10 entre les 5^{ième} et 20^{ième} cycles, à C entre le 10^{ième} et 100^{ième} cycle et à 10C entre les 20^{ième} et 200^{ième} cycles.

| Composés calcinés à 950°C | TiNb₂O₇ (Art antérieur) | Ga_{0.10}Ti_{0.80}Nb_{2.10}O₇ (exemple 1) | Fe_{0.10}Ti_{0.80}Nb_{2.10}O₇ (exemple 2) |
|---|---|---|---|
| C/10 | 5 | 3 | 7 |
| C | 34 | 16 | 12 |
| 10C | 26 | 19 | 11 |

De manière générale, les oxydes mixtes selon l'invention présentent des pertes de capacités inférieures au matériau TiNb₂O₇ de l'art antérieur.

## Revendications

1. Oxyde mixte de titane et de niobium, dépourvu de lithium, comprenant au moins un métal trivalent ou le bore, et présentant un rapport molaire Nb/Ti supérieur à 2, ***caractérisé* en ce qu'**il s'agit d'un matériau de formule (I) :
MₓTi₁₋₂ₓNb₂₊ₓ0_{7±δ} (I)
dans laquelle 0 < x ≤ 0.20 ; -0.3 ≤ δ ≤ 0.3,
M étant choisi dans le groupe comprenant le fer, le gallium, le molybdène, l'aluminium, le bore, et leurs mélanges.

2. Oxyde mixte de titane et de niobium selon la revendication 1, ***caractérisé* en ce que** M est le fer ou le gallium.

3. Procédé de préparation de l'oxyde mixte de titane et de niobium selon l'une des revendications 1 à 2, comprenant les étapes suivantes :
- traitement solvothermal d'une solution contenant au moins : un précurseur de titane, un précurseur de niobium, et un précurseur du métal trivalent ou du bore ;
- optionnellement broyage mécanique de l'oxyde mixte obtenu à l'issue du traitement solvothermal ;
- calcination de l'oxyde mixte.

4. Procédé selon la revendication 3, ***caractérisé* en ce que** l'étape de calcination est réalisée à une température comprise entre 700 et 1200 °C.

5. Procédé selon la revendication 3 ou 4, ***caractérisé* en ce que** le traitement solvothermal est réalisé à une température comprise entre 200 et 250 °C.

6. Procédé selon l'une des revendications 3 à 5, ***caractérisé* en ce que** la durée du traitement solvothermal est comprise entre 2 et 10 heures.

7. Procédé selon l'une des revendications 3 à 6, ***caractérisé* en ce que** le précurseur de titane est choisi dans le groupe comprenant l'oxysulfate de titane (TiOSO₄) ; l'isopropoxyde de titane (Ti(OCH(CH₃)₂)₄) ; le chlorure de titane (TiCl₄) ; et le butoxyde de titane (Ti(OC₄H₉)₄).

8. Procédé selon l'une des revendications 3 à 7, ***caractérisé* en ce que** le précurseur de niobium est choisi dans le groupe comprenant le chlorure de niobium et l'éthoxyde de niobium.

9. Procédé selon l'une des revendications 3 à 8, ***caractérisé* en ce que** le précurseur du métal trivalent ou du bore est choisi dans le groupe comprenant FeCl₃, Fe(NO₃)₃ ; Fe₂(SO₄)₃ ; GaCl₃ ; Ga(NO₃)₃ ; Ga₂(SO₄)₃ ; MoCl₃ ; AlCl₃ ; Al(N0₃)₃ ; Al₂(SO₄)₃ ; et BCl₃.

10. Procédé selon l'une des revendications 3 à 9, ***caractérisé* en ce que** la durée de calcination est comprise entre 30 minutes et 2 heures.

11. Procédé selon l'une des revendications 3 à 10, ***caractérisé* en ce que** l'oxyde mixte est refroidi à une vitesse comprise entre 5 et 20°C/minute, après l'étape de calcination.

12. Utilisation de l'oxyde mixte selon l'une des revendications 1 à 3 en tant que matériau d'électrode, avantageusement d'anode.

13. Electrode comprenant l'oxyde mixte de titane et de niobium selon l'une des revendications 1 à 2.

14. Accumulateur Li-ion comprenant l'électrode selon la revendication 13.

## Patentansprüche

1. Lithiumfreies Mischoxid aus Titan und Niob, das mindestens ein dreiwertiges Metall oder Bor enthält und ein Molverhältnis Nb/Ti von mehr als 2 aufweist, ***dadurch gekennzeichnet,* dass** es sich um ein Material mit der folgenden Formel (I) handelt:
MₓTi₁ - ₂ₓNb_{2 + x}O_{7 ± δ} (I)
mit 0 <x ≤ 0,20; -0,3 ≤ δ ≤ 0,3;
wobei M aus der Gruppe ausgewählt wird, zu der Eisen, Gallium, Molybdän, Aluminium, Bor und ihre Mischungen gehören.

2. Mischoxid aus Titan und Niob gemäß Anspruch 1, ***dadurch gekennzeichnet, dass*** es sich bei M um Eisen oder Gallium handelt.

3. Verfahren zur Herstellung des Mischoxids aus Titan und Niob nach einem der vorstehenden Ansprüche 1 bis 2, das die folgenden Schritte umfasst:
- Solvothermal-Behandlung einer Lösung, die mindestens einen Titanvorläufer, einen Niob-Vorläufer und einen Vorläufer des trivalenten Metalls oder einen Bor-Vorläufer enthält;
- optional mechanisches Zerkleinern des am Ende der Solvothermal-Behandlung entstandenen Mischoxids;
- Kalzinierung des Mischoxids.

4. Verfahren gemäß Anspruch 3, ***dadurch gekennzeichnet,* dass** die Kalzinierung bei einer Temperatur zwischen 700 °C und 1.200 °C abläuft.

5. Verfahren gemäß Anspruch 3 oder 4, ***dadurch gekennzeichnet,* dass** die Solvothermal-Behandlung bei einer Temperatur zwischen 200 und 250°C erfolgt.

6. Verfahren gemäß einem der Ansprüche 3 bis 5, ***dadurch gekennzeichnet,* dass** die Solvothermal-Behandlung zwischen 2 und 10 Stunden dauert.

7. Verfahren gemäß einem der Ansprüche 3 bis 6, ***dadurch gekennzeichnet,* dass** der Titan-Vorläufer aus der Gruppe ausgewählt wird, zur der Titanoxysulfat (TiOSO₄); Titane-Isopropoxyd (Ti(OCH(CH₃)₂)₄); Titanchlorid (TiCl₄) und Titanbutoxyd (Ti(OC₄H₉)₄) gehören.

8. Verfahren gemäß einem der Ansprüche 3 bis 7, ***dadurch gekennzeichnet,* dass** der Niobvorläufer aus der Gruppe ausgewählt wird, zur der Niobchlorid und Niobethoxid gehören.

9. Verfahren gemäß einem der Ansprüche 3 bis 8 ***dadurch gekennzeichnet,* dass** der Vorläufer des trivalenten Metalls oder Bors ausgewählt wird aus der Gruppe, zu der FeCl₃, Fe(NO₃)₃; Fe₂(SO₄)₃; GaCl₃; Ga(NO₃)₃; Ga₂(SO₄)₃; MoCl₃; AlCl₃; Al(NO₃)₃; Al₂(SO₄)₃ und BCl₃ gehören.

10. Verfahren gemäß einem der Ansprüche 3 bis 9, ***dadurch gekennzeichnet,* dass** die Kalzinierungsdauer zwischen 30 Minuten und 2 Stunden dauert.

11. Verfahren gemäß einem der Ansprüche 3 bis 10, ***dadurch gekennzeichnet,* dass** das Mischoxid mit einer Geschwindigkeit zwischen 5 und 20°C per Minute nach dem Schritt der Kalzinierung gekühlt wird.

12. Verwendung des Mischoxids nach einem der Ansprüche 1 bis 2, als Elektrodenmaterial, vorteilhafterweise für die Anode.

13. Elektrode, die das Mischoxid aus Titan und Niob nach einem der Ansprüche 1 bis 2 enthält.

14. Li-Ionen-Akku der eine Elektrode nach Anspruch 13 enthält.

## Claims

1. A lithium-free mixed titanium and niobium oxide, comprising at least one trivalent metal or boron, and having a molar ratio Nb/Ti greater than 2, ***characterized* in that** it relates to a material of formula (I) :
MₓTi₁₋₂ₓNb₂₊ₓO_{7±δ} (I)
where 0 < x ≤ 0.20; -0.3 ≤ δ ≤ 0.3;
M being selected from the group comprising iron, gallium, molybdenum, aluminum, boron, and mixtures thereof.

2. The mixed titanium and niobium oxide of claim 1, **characterized in that** M is iron or gallium.

3. A method of preparing the mixed titanium and niobium oxide of any of claims 1 and 2, comprising the steps of:
- solvothermal treatment of a solution containing at least: a titanium precursor, a niobium precursor, and a precursor of the trivalent metal or boron;
- optionally, mechanical grinding of the mixed oxide obtained at the end of the solvothermal treatment;
- calcination of the mixed oxide.

4. The method of claim 3, ***characterized* in that** the calcination step is performed at a temperature in the range from 700 to 1,200°C.

5. The method of claim 3 or 4, ***characterized* in that** the solvothermal treatment is performed at a temperature in the range from 200 to 250°C.

6. The method of any of claims 3 to 5, ***characterized* in that** the duration of the solvothermal treatment is in the range from 2 to 10 hours.

7. The method of any of claims 3 to 6, ***characterized* in that** the titanium precursor is selected from the group comprising titanium oxysulfate (TiOSO₄); titanium isopropoxide (Ti(OCH(CH₃)₂)₄); titanium chloride (TiCl₄); and titanium butoxide (Ti(OC₄H₉)₄).

8. The method of any of claims 3 to 7, ***characterized* in that** the niobium precursor is selected from the group comprising niobium chloride and niobium ethoxide.

9. The method of any of claims 3 to 8, ***characterized* in that** the precursor of the trivalent metal or of boron is selected from the group comprising FeCl₃, Fe(NO₃)₃; Fe₂(SO₄)₃; GaCl₃; Ga(NO₃)₃; Ga₂(SO₄)₃; MoCl₃; AlCl₃; Al(NO₃)₃; Al₂(S0₄)₃; and BCl₃.

10. The method of any of claims 3 to 9, ***characterized* in that** the calcination duration is in the range from 30 minutes to 2 hours.

11. The method of any of claims 3 to 10, ***characterized* in that** the mixed oxide is cooled at a rate in the range from 5 to 20°C per minute, after the calcination step.

12. A use of the mixed oxide of any of claims 1 and 2 as an electrode material, advantageously as an anode material.

13. An electrode comprising the mixed titanium and niobium oxide of any of claims 1 and 2.

14. An Li-ion accumulator comprising the electrode of claim 13.
